# NEUE EUROPÄISCHE PATENTSCHRIFT

(11) **EP 0 794 106 B2**
(45) Veröffentlichungstag und Bekanntmachung des Hinweises auf die Entscheidung über den Einspruch: **24.01.2007**
(45) Hinweis auf die Patenterteilung: 18.09.2002
(21) Anmeldenummer: 97103390.7
(22) Anmeldetag: 26.02.1997
(51) Int. Cl.: B62D 21/11, B62D 3/12

(54) **Fahrschemel für eine gelenkte Achse eines Kraftfahrzeuges**
Subframe for the steered wheels of a motor vehicle
Faux-châssis des roues directrices d'un véhicule automobile

(30) Priorität: 05.03.1996 DE 19608414
(43) Veröffentlichungstag der Anmeldung: 10.09.1997
(73) Patentinhaber: ADAM OPEL AG, 65423 Rüsselsheim (DE)
(72) Erfinder: Stein, Günther, 65428 Rüsselsheim (DE); Konter, André-Alexander, Dipl.-Ing., 64579 Gernsheim (DE)
(74) Vertreter: Daniel, Ulrich W.P.

(56) Entgegenhaltungen:
- EP-A- 0 143 558
- EP-B- 0 779 204
- FR-A- 2 615 458
- US-A- 4 060 011

## Beschreibung

Die Erfindung betrifft einen Fahrschemel für eine gelenkte Achse, insbesondere Vorderachse eines Kraftfahrzeuges, nach dem Oberbegriff des Patentanspruches 1.

Ein derartiger Fahrschemel ist mit WO 90/05083 beschrieben. Bei diesem bildet eine einstükkige Guß-Baueinheit einen Hilfsrahmen, der ein Gehäuse für eine Zähnstangenlenkung sowie seitliche konsolenartige Angüsse mit Lagern zur Anlenkung von Radführungslenkern und Lagern zur Befestigung des Fahrschemels am Fahrzeugaufbau umfaßt, wobei angegossene Längs- und Querrippen an diesem Gußteil die Stabilität erhöhen.

Ein derartiger Fahrschemel erfordert ein relativ großes und zerklüftetes Gußtei: das nur mit erhöhtem Aufwand und mit relativ hohem Fehlerrisiko herstellbar ist. Für die nachträgliche Bearbeitung des Lenkgetriebegehäuses sowie der Lagerstellen sind entsprechend große Anlagen notwendig, die zusammen mit den dafür erforderlichen Grundflächen erhebliche Kosten verursachen. Der Fahrschemel muß, da er einstückig ist, insgesamt aus einem Werkstoff bestehen, der sowohl die Anforderungen des Lenkgetriebes hinsichtlich guter Gleit- und Verschleißeigenschaften als auch der Radanlenkungsteile hinsichtlich ausreichender Dauerfestigkeit erfüllt. Dies erfordert einen hochwertigen und damit teuren Werkstoff.

Aus der EP 0 143 558 A2 ist ein Lenk- und Aufhängungssystem eines Kraftfahrzeuges bekannt, bei dem an einem querverlaufenen Gehäuse eines Lenkgetriebes beidseitig Halterungen zum Verbinden mit der Karosserie und mit jeweils einem Radführungsglied vorgesehen sind. Ein quer zu diesem Gehäuse verlaufender Träger ist einerseits mit dem Gehäuse und andererseits mit der Karosserie im vorderen Bereich verbunden. Ein solches Lenk- und Aufhängungssystem ist jedoch aufwendig in der Montage im Kraftfahrzeug. Außerdem sind noch zusätzliche Träger zur Erhöhung der Stabilität des Gehäuses notwendig.

Der Erfindung liegt die Aufgabe zugrunde, einen gattungsgemäßen Fahrschemel zu schaffen, der technologisch einfach und mit geringen Kosten herstellbar ist und trotzdem allen funktionellen Anforderungen gerecht wird.

Erfindungsgemäß wird diese Aufgabe durch die kennzeichnenden Merkmale des Patentanspruches 1 gelöst.

Durch die Zusammensetzung des Fahrschemels aus drei getrennten Teilen kann für das Gehäuse des Lenkgetriebes sowie für die Trägerteile jeweils der für die Funktion optimale Werkstoff eingesetzt werden. So können z. B. die Trägerteile aus einem Leichtmetall im Thixoforming-Verfahren hergestellt werden, während das Gehäuse des Lenkgetriebes als Strangpreßteil vorgefertigt sein kann. Ebenso kann das Gehäuse des Lenkgetriebes zur Gewichtsreduzierung aus einem armierten Kunststoff bestehen. Die Bearbeitung des Gehäuses des Lenkgetriebes sowie der beiden Trägerteile erfolgt bis zu deren Verbindung zum Fahrschemel getrennt auf relativ kleinen und einfachen Maschinen bei guter Zugänglichkeit zu den Bearbeitungsorten.

Durch die Anordnung der Aufnahmen für die Befestigungsmittel an den äußeren Endbereichen der Trägerteile kann einerseits in an sich bekannter Weise der Fahrschemel gegenüber dem Fahrzeugkörper relativ weich aufgehängt werden, ohne daß störend große Winkelabweichungen zwischen Fahrschemel und Fahrzeugkörper unter den Betriebsbelastungen auftreten, andererseits werden dadurch Kräfte vom Lenkgetriebegehäuse ferngehalten, so daß dessen Querschnitt relativ klein und das Gehäuse damit leicht ausgeführt werden kann.

Die Verbindung zwischen dem das Lenkgetriebegehäuse bildenden rohrförmigen Mittelteil und den Trägerteilen erfolgt durch jeweils vorbereitete zueinanderpassende Anschlußstücke, die bei beidseitigen Metallteilen als Schweißstutzen im übrigen aber auch als klebbare Muffenverbindungen ausgeführt sind.

Besonders vorteilhaft kann das Gehäuse des Zahnstangenlenkgetriebes für zwei Ritzellagerungen vorbereitet sein, die alternativ für Rechtslenkerfahrzeuge oder Linkslenkerfahrzeuge benutzt werden. Die dann jeweils verbleibende Ritzellagerung kann bei Bedarf für den Eingriff eines mit einem Servomotor verbundenen zusätzlichen Ritzels genutzt werden.

Durch die übereinstimmende Ausführung von zwei Ritzellagerungen kann das rohrförmige Gehäuse und damit auch der gesamte Fahrschemel baugleich sowohl für Rechts- als auch für Linkslenkertahrzeuge eingesetzt werden.

Bei Verwendung von Leichtmetall für das Mittelteil und die Trägerteile ist deren Verbindung besonders vorteilhaft durch Schweißen der vorher bearbeiteten Teile herstellbar. Dabei sind die Teile an ihren funktionswichtigen Punkten, z. B. den Aufnahmen für die Befestigungsmittel, in einer Schweißvorrichtung gehalten.

Die nachträgliche Verbindung der bearbeiteten Teile ermöglicht gegenüber einer einstückigen Guß-Baueinheit eine optimalere Anpassung an die in einem Kraftfahrzeug sehr engen Einbauverhältnisse.

Ein Ausführungsbeispiel der Erfindung ist nachstehend anhand einer Zeichnung, die einen erfindungsgemäßen Fahrschemel in perspektivischer Ansicht zeigt, näher erläutert.

Ein rohrförmiges Gehäuse 1 aus Leichtmetall verbindet als Querträger zwei ebenfalls aus Leichtmetall bestehende Trägerteile 2, 3 und ist mit diesen an sich entsprechenden Anschlußstücken 4 durch Schweißen verbunden. Das Gehäuse 1 umschließt die Zahnstange eines Zahnstangenlenkgetriebes, dessen Lenkritzelwelle 5 in einem am Gehäuse 1 befindlichen Lagerstutzen 6 gelagert ist. Die Zahnstange setzt sich an beiden Enden des Gehäuses 1 als Spurstange 7 fort, die mit Manschetten 8 gegenüber dem Gehäuse 1 abgedichtet sind. An der Lenkritzelwelle 5 greift über Gelenke 9 eine Lenkwelle 10 an. Die Trägerteile 2, 3 weisen Lager 11 für die Anlenkung von Radführungsgliedern 12 auf, im vorliegenden Fall als Querlenker ausgebildet. An den äußeren Enden der Trägerteile 2, 3 sind Aufnahmen 13 für die Mittel zur Befestigung des Fahrschemels am Fahrzeugkörper vorgesehen. Diese Aufnahmen 13 sind sowohl in Fahrzeugquerrichtung als auch in Fahrzeuglängsrichtung möglichst weit auseinanderliegend angebracht.

Ein zweiter Lagerstutzen 14 am Gehäuse 1 dient der Lagerung einer weiteren mit der Zahnstange in Eingriff befindlichen Ritzelwelle, an der ein elektrischer Servomotor 15 über ein Getriebe 16 angreift. Im Lagerstutzen 14 kann aber auch eine Lenkritzelwelle gelagert sein, wenn dann im ersten Lagerstutzen 6 anstelle der Lenkritzelwelle 5 eine Ritzelwelle eines Servoaggregates angeordnet ist (gestrichelt dargestellt). Dies ermöglicht die Anwendung des baugleichen Gehäuses 1 wahlweise für Fahrzeuge mit Rechts- oder Linkslenkung.

Ein Fahrschemel nach der Erfindung kann sehr gut an die Raumverhältnisse in einem Kraftfahrzeug angepaßt werden. Die Breite ergibt sich durch Anpassen der Länge des Gehäuses 1. Da die Trägerteile 2, 3 als Einzelteile gesondert gefertigt werden, kann auch die Basis der Aufnahme 13 in Fahrzeuglängsrichtung nahezu beliebig bemessen werden, so daß die vom Fahrschemel auf den Fahrzeugkörper wirkenden Kräfte optimal abgestimmt werden können.

Die Erfindung ist nicht auf das Ausführungsbeispiel beschränkt. Neben den bereits weiter oben aufgezeigten Varianten hinsichtlich der Materialwahl oder der Verbindung zwischen Gehäuse 1 und Trägerteilen 2, 3 kann auch die Ausführung des Zahnstangenlenkgetriebes beliebig gewählt werden. So entspricht es auch der Erfindung, wenn am Gehäuse 1 nur ein Lagerstutzen 6 vorgesehen ist. An diesem kann neben der Lenkritzelwelle 5 gleichzeitig auch ein Servoaggregat angreifen.

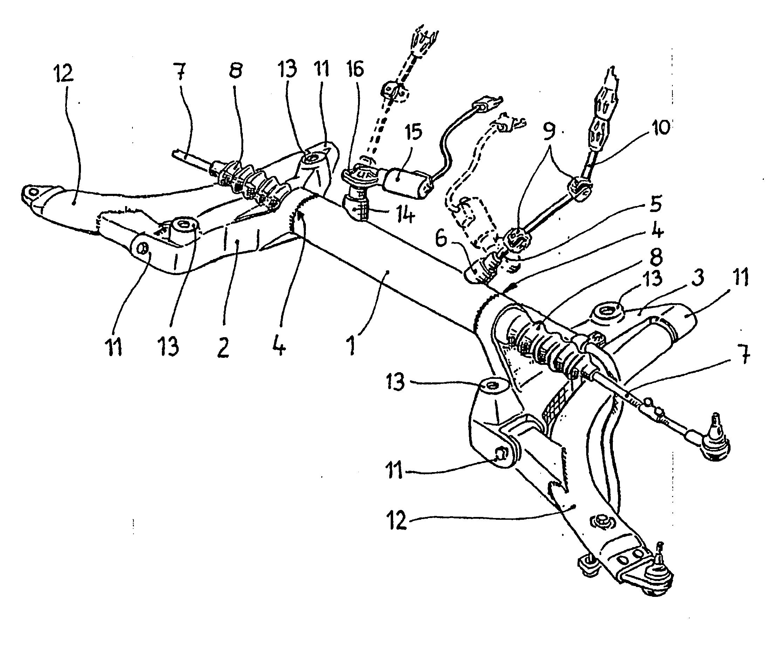

## Patentansprüche

1. Fahrschemel für eine gelenkte Achse, insbesondere Vorderachse eines Kraftfahrzeuges,
mit einem ein Gehäuse (1) eines Zahnstangengelenkgetriebes bildenden Querträger, an den Enden des Querträgers angelenkten Radführungsgliedern (12) sowie Mitteln zur Befestigung des Fahrschemels an einem Fahrzeugkörper,
wobei das Gehäuse (1) des Zahnstangengelenkgetriebes als rohrförmiges Gehäuse (1) ausgebildet ist
und den Mittelteil des Querträgers bildet,
mit den Enden des rohrförmigen Gehäuses (1) jeweils ein Trägerteil (2,3) fest verbunden ist,
welches Lager (11) für die Anlenkung der Radführungsglieder (12) sowie Aufnahmen (13) für die Mittel zur Befestigung des Fahrschemels aufweist,
**dadurch gekennzeichnet, dass**
die Aufnahmen (13) an den äußeren Endbereichen der gabelförmigen Trägerteile (2,3) angeordnet sind und wobei der Fahrschemel dreiteilig aus dem Gehäuse (1) und den je zwei Trägerteilen (2, 3) ausgebildet ist, wobei das Gehäuse (1) und die zwei Trägerteile (2, 3) getrennt voneinander bearbeitet sind und nach deren separater Herstellung verbunden sind,
wobei die Verbindung zwischen dem Gehäuse (1) und den Trägerteilen (2,3) durch jeweils vorbereitete zueinanderpassende Anchlußstucke (4), die bei beidseitigen Metallteilen als Schweißstutzen oder als klebbare Muffenverbindung ausgeführt sind.

2. Fahrschemel nach Anspruch 1, **dadurch gekennzeichnet, daß** die Trägerteile (2, 3) mit einem dem Querschnitt des rohrförmigen Gehäuses (1) entsprechenden Anschlußstück (4) versehen sind, an denen sich jeweils ein gabelförmiger Fortsatz anschließt, dessen Enden die Aufnahme für die Lager (11) der Anlenkung der Radführungsglieder (12) bilden.

3. Fahrschemel nach Anspruch 1 und 2, **dadurch gekennzeichnet, daß** am rohrförmigen Gehäuse (1) des Zahnstangenlenkgetriebes zwei mit ihrer Achse die Gehäuseachse kreuzende Lagerstutzen (6, 14) angeordnet sind, die jeweils eine Ritzellagerung aufnehmen, wobei alternativ ein Lagerstutzen (6) für eine Lenkritzelwelle (5) und der andere Lagerstutzen (14) für ein mit einem Servomotor (15) verbundenes Ritzel vorgesehen sind.

4. Fahrschemel nach Anspruch 3, **dadurch gekennzeichnet, daß** die Lagerstutzen (6, 14) und die in ihnen befindlichen Ritzellagerungen baugleich sind.

5. Fahrschemel nach Anspruch 1 bis 4, **dadurch gekennzeichnet, daß** die Verbindung an den Anschlußstücken (4) zwischen dem das Mittelteil bildenden Gehäuse (1) und den Trägerteilen (2, 3) eine Schweißverbindung ist, wobei das Gehäuse (1) und Trägerteile (2, 3) aus miteinander schweißbarem Leichtmetall bestehen.

## Claims

1. Subframe for a steered axle, in particular a front axle of a motor vehicle,
with a cross member forming a housing (1) of a rack and pinion steering gear,
wheel guide members (12) linked to the ends of the cross member and also
means for fastening the subframe to a vehicle body,
wherein the housing (1) of the rack and pinion steering gear is constructed as a tubular housing (1)
and forms the centre portion of the cross member,
to each of the ends of the tubular housing (1) is rigidly connected a support portion (2, 3)
which comprises bearings (11) for linking the wheel guide members (12) as well as means (13) for receiving the means for fastening the subframe, **characterised in that**
the receiving means (13) are arranged in the outer end regions of the fork-shaped support portions (2, 3) and wherein the subframe is constructed in three parts of the housing (1) and the two support portions (2, 3), wherein the housing (1) and the two support portions (2, 3) are formed separately from each other and connected after their separate manufacture,
wherein the connection between the housing (1) and the support portions (2, 3) by respectively prepared mutually-matching connecting pieces (4), which are configured in the case of metal parts on both sides as welding pieces or as a sleeve connection capable of adhesion.

2. Subframe according to claim 1, **characterised in that** the support portions (2, 3) are provided with a connecting piece (4) corresponding to the cross-section of the tubular housing (1), which is in each case adjoined by a fork-shaped extension whose ends form the receptacle for the bearings (11) for linking the wheel guide members (12).

3. Subframe according to claims 1 and 2, **characterised in that** on the tubular housing (1) of the rack and pinion steering gear are arranged two bearing sockets (6, 14) which with their axis intersect the housing axis and which each receive a pinion mounting, wherein alternatively one bearing socket (6) is provided for a steering pinion shaft (5) and the other bearing socket (14) is provided for a pinion connected to a servo motor (15).

4. Subframe according to claim 3, **characterised in that** the bearing sockets (6, 14) and the pinion mountings located in them have the same construction.

5. Subframe according to claims 1 to 4, **characterised in that** the joint at the connecting pieces (4) between the housing (1) forming the centre portion and the support portions (2, 3) is a welded joint, wherein the housing (1) and support portions (2, 3) are made of light metal which can be welded to each other.

## Revendications

1. Faux-châssis pour un essieu directeur, en particulier pour l'essieu avant d'un véhicule automobile,
avec une poutre transversale qui forme un carter (1) pour un mécanisme de crémaillère de direction,
avec des organes de guidage de roue (12) articulés aux extrémités de la poutre transversale,
ainsi qu'avec des moyens pour fixer le faux-châssis à une caisse de véhicule,
le carter (1) du mécanisme de crémaillère de direction étant réalisé sous forme de carter (1) tubulaire
et constituant la partie médiane de la poutre transversale,
les extrémités du carter tubulaire étant liées rigidement chacune à un élément support (2, 3)
qui est pourvu de paliers (11) pour l'articulation des organes de guidage de roue (12) ainsi que de logements (13) pour les moyens de fixation du faux-châssis,
**caractérisé en ce que**
les logements (13) sont disposés dans les régions d'extrémité extérieures des éléments supports (2, 3) en forme de fourche, le faux-châssis étant formé de trois parties, à savoir le carter (1) et les deux éléments supports (2, 3), le carter (1) et les deux éléments supports (2, 3) étant usinés séparément et liés les uns aux autres après leur fabrication séparée, la liaison entre le carter (1) et les éléments supports (2, 3) étant réalisée par des pièces de raccordement pré-ajustées entre elles préfabriquées, qui dans le cas de pièces en métal des deux côtés sont agencées sous la forme de bossages à souder ou de manchons de liaison à coller.

2. Faux-châssis selon la revendication 1, **caractérisé en ce que** les éléments supports (2, 3) comportent une partie de liaison adaptée à la section du carter (1) tubulaire, à laquelle se raccorde un prolongement en forme de fourche, dont les extrémités forment les logements pour les paliers (11) d'articulation des organes de guidage de roue (12).

3. Faux-châssis selon la revendication 1 ou 2, carfactérisé en ce qu'il est prévu sur le carter (1) tubulaire du mécanisme de crémaillère de direction deux bossages de palier (6, 14), dont les axes sont sécants avec l'axe du carter et qui reçoivent chacun un palier de pignon, un bossage de palier (6) étant prévu pour un pignon arbré (5) de direction et l'autre bossage de palier (14) étant prévu pour un pignon lié à un servomoteur (15).

4. Faux-châssis selon la revendication 3, **caractérisé en ce que** les bossages de palier (6, 14) et les paliers de pignons montés dans ceux-ci sont identiques sur le plan de la construction

5. Faux-châssis selon la revendication 1 à 4, **caractérisé en ce que** la liaison au niveau de la partie de liaison (4) entre le carter (1) constituant la partie médiane de la poutre et les éléments supports (2, 3) est une liaison par soudure, le carter (1) et les éléments supports (2, 3) étant réalisés en des métaux légers soudables entre eux.
